# EUROPÄISCHE PATENTSCHRIFT

(11) **EP 3 346 017 B1**
(45) Veröffentlichungstag und Bekanntmachung des Hinweises auf die Patenterteilung: **15.09.2021**
(21) Anmeldenummer: 17150817.9
(22) Anmeldetag: 10.01.2017
(51) Int. Cl.: C22B 34/24

(54) **VERFAHREN ZUM SCHNEIDEN VON REFRAKTÄRMETALLEN**
METHOD FOR CUTTING REFRACTORY METALS
PROCÉDÉ DE COUPE DE MÉTAUX RÉFRACTAIRES

(43) Veröffentlichungstag der Anmeldung: 11.07.2018
(73) Patentinhaber: Heraeus Deutschland GmbH & Co. KG, 63450 Hanau (DE)
(72) Erfinder: Schölz, Friedhold, 63517 Rodenbach (DE); Stiedl, Egbert, 63486 Bruchköbel (DE); Spaniol, Bernd, 63546 Hammersbach (DE); Traeger, Norbert, 63477 Maintal (DE); Feuring, Werner, 63571 Gelnhausen (DE)
(74) Vertreter: Sterzel, Roland

(56) Entgegenhaltungen:
- WO-A2-2004/069453
- JP-A- H11 264 064
- US-A1- 2009 211 667
- US-A1- 2011 009 965
- US-A1- 2011 130 294
- Saito et al.: "Multi-wire slicing of large grain ingot material" In: "Proceedings of SRF2009", 2009, XP002771689, Seiten 467-472, * Abbildungen 3-6 * * *
- ROMAND M ET AL: "Concentration profiles of passive films formed on niobium metal and niobium-base alloys by auger electron spectrometry", MATERIALS RESEARCH BULLETIN, ELSEVIER, KIDLINGTON, GB, vol. 11, no. 5, 1 May 1976 (1976-05-01), pages 517-524, XP024080683, ISSN: 0025-5408, DOI: 10.1016/0025-5408(76)90233-6 [retrieved on 1976-05-01]
- Prasenjit Kar ET AL: "Oxidation of Tantalum with Mechanical Force", Electrochemical and Solid-State Letters, vol. 11, no. 2, 1 January 2008 (2008-01-01), page C13, XP055728593, US ISSN: 1099-0062, DOI: 10.1149/1.2820616

## Beschreibung

Die Erfindung betrifft Verfahren zum Schneiden von Refraktärmetallen, bei dem ein Festkörper aus einem Refraktärmetall mit einer Schneideinrichtung mechanisch und spanabhebend geschnitten wird.

Für unterschiedliche Anwendungen werden Scheiben aus hochreinen Refraktärmetallen benötigt. So werden zur Herstellung von supraleitenden Kavitäten dünne Bleche oder Scheiben aus Niob benötigt, wobei diese Scheiben möglichst wenig Verunreinigungen aus Sauerstoff (O), Stickstoff (N), Wasserstoff (H) oder anderen Gasen beinhalten sollten, da diese die supraleitenden Eigenschaften, insbesondere das Restwiderstandsverhältnis negativ beeinflussen.

Die WO 2004/069453 A2 offenbart ein Verfahren zur Herstellung eines Bands, bei dem ein aus einem Pulver hergestellter Ring mit Hilfe von Funkenerosion geschnitten wird. Aus der JP H11 264064 A ist die Herstellung einer Niob-Materials bekannt, bei dem das Material durch Erhitzen in einer sauerstoffhaltigen Atmosphäre oberflächlich oxidiert wird. In dem Artikel "Mulitwire slicing of large grain ingot material" von Saito et al. in Proceedings of SRF2009, Seiten 467-472 (D3) werden Funkenerosion und mechanische Säge-Verfahren beschrieben.

Aus der US 2011/0130294 A1 ist ein Verfahren zur Herstellung von Scheiben aus Niob (Nb) aus einem Niob-Festkörper bekannt. Dabei werden zum Schneiden der Scheiben aus dem Festkörper mehrere vibrierende Drähte eingesetzt, die mit abrasiv wirkenden Körnern besprüht werden, so dass der Festkörper geschnitten wird.

Nachteilig ist hieran, dass beim Schneiden Sauerstoff, Stickstoff und Wasserstoff und andere Verunreinigungen in die Scheiben eingetragen werden. Diese müssen anschließend wieder entfernt werden. Refraktärmetalle neigen nämlich dazu, bei wässriger und auch bei öliger Bearbeitung O, N und H durch Cracken des Wassers oder des Öls an der reaktiven neu geschaffenen Metalloberfläche aufzunehmen. Diese dann interstitiell gelösten Gase verspröden die Refraktärmetalle. H kann durch einfache Vakuum-Wärmebehandlung beseitigt werden. O und N bleiben jedoch gebunden und können nur durch Aufbringen noch stärkerer Getter und Diffusionsglühungen mit anschließendem Entfernen der Getterschicht wieder aus dem Metall entfernt werden. Hierzu muss zunächst ein Getter auf die Oberfläche aufgebracht werden, beispielsweise durch Sputtern oder Bedampfen. Der Verbund muss im Vakuum wärmebehandelt werden, damit die gelösten Gase in den Getter diffundieren. Die Getterschicht muss anschließend entfernt werden. Hierzu kann ein Beizen eingesetzt werden. Der beschriebene Prozess ist zeitlich und bezüglich der Kosten sehr aufwendig. Diese Maßnahmen machen also zum Beispiel die Herstellung der Niob-Scheiben zur Herstellung von supraleitenden Kavitäten sehr kostspielig.

Die Aufgabe der Erfindung besteht also darin, die Nachteile des Stands der Technik zu überwinden. Insbesondere soll ein Verfahren zum Schneiden von Refraktärmetallen aus einem Festkörper bereitgestellt werden, das einfach, schnell und kostengünstig durchzuführen ist. Aufgabe ist es also, durch die Vermeidung der Aufnahme von O, H und N solche aufwendigen Nachbehandlungen zu vermeiden. Das Verfahren soll kostengünstig zu realisieren sein und dabei möglichst wenige zusätzliche Verfahrensschritte zur nachfolgenden Reinigung und Nachbearbeitung benötigen. Die erzeugte Scheibe soll für eine nachfolgende Bearbeitung möglichst weitgehend fertiggestellt sein. Das eigentliche Schneiden darf dabei nicht zu teuer werden. Es soll dabei möglichst verhindert werden, dass Verunreinigungen, insbesondere Sauerstoff, Stickstoff und/oder Wasserstoff, in das Innere der erzeugten Scheiben beziehungsweise der abgeschnittenen Körper eindringen. Die erzeugten Scheiben beziehungsweise Körper des Refraktärmetalls sollen eine möglichst hohe Reinheit aufweisen und dabei auch keine unter Normaldruck und Raumtemperatur gasförmigen Elemente enthalten.

Die Aufgaben der Erfindung werden gelöst durch ein Verfahren zum Schneiden von Refraktärmetallen, bei dem ein Festkörper aus einem Refraktärmetall mit einer Schneideinrichtung mechanisch und spanabhebend geschnitten wird, wobei die Schneideinrichtung zum Schneiden mit einem Fluid aufweisend zumindest 50 Gew% Wasser benetzt wird, wobei die Schneideinrichtung während des Schneidens auf ein positives elektrisches Potenzial gegenüber dem Festkörper gebracht wird.

Das wässrige Fluid enthält vorzugsweise mehr als 70 Gew% Wasser und ein partikuläres Schleifmittel, wobei die Partikel des Schleifmittels mit dem Wasser eine Schlämmung bilden. Ein solches wässriges Fluid wird auch als Slurry bezeichnet. Die elektrische Spannung kann vorzugsweise über das Fluid beziehungsweise das Slurry auf die Schneideinrichtung übertragen werden.

Es kann vorgesehen sein, dass die Schnittfläche des Festkörpers durch das positive elektrische Potenzial der Schneideinrichtung gegenüber dem Festkörper und durch das wässrige Fluid oberflächlich oxidiert wird, so dass sich beim Schneiden eine Oxidschicht auf der Schnittfläche bildet, wobei sich bevorzugt eine amorphe Oxidschicht auf der Schnittfläche bildet.

Hiermit wird eine Schutzschicht, in Form einer schützenden Oxidschicht gegen den Eintrag von Stickstoff, Wasserstoff, Sauerstoff und/oder anderen Gasen in das Refraktärmetall und zur Verhinderung des Crackens von Wassermolekülen an der Refraktärmetalloberfläche erzeugt, wobei mit der schützenden Oxidschicht auch schon während des Schneidens ein Vordringen von Wassermolekülen an die Metalloberfläche und der Eintrag störender Gase in das Refraktärmetall verhindert oder zumindest verringert werden kann. Damit kann die Reinheit des abgeschnittenen Körpers aus dem Refraktärmetall erhalten oder auf einem hohen Niveau bleiben.

Dabei kann wiederum vorgesehen sein, dass durch die sich beim Schneiden bildende Oxidschicht eine Aufnahme von Wasserstoff und Sauerstoff durch die Oxidschicht hindurch ins Innere des Festkörpers reduziert wird oder verhindert wird, wobei vorzugsweise auch die Aufnahme Stickstoff und/oder Kohlenstoff und/oder von anderen Gasen durch die Oxidschicht hindurch ins Innere des Festkörpers reduziert wird oder verhindert wird.

Hierdurch wird sichergestellt, dass die schützende Oxidschicht die neu geschaffene Oberfläche des Festkörpers passiviert und auch für die genannten Verunreinigungen undurchlässig oder weitgehend undurchlässig ist, so dass der abgeschnittene Teil des Refraktärmetalls eine besonders hohe Reinheit im Inneren (im Bulk) aufweist oder zumindest mit wenig Verunreinigungen dieser Gase, insbesondere mit wenig Sauerstoff und Wasserstoff, erzeugt wird. Durch die entstehende Refraktärmetalloxidschicht wird ein Cracken von Wassermolekülen an der frisch geschnittenen Refraktärmetalloberfläche verhindert. Dadurch wird die Anzahl der an der Oberfläche des Festkörpers vorliegenden freien Radikale, das heißt von atomarem Wasserstoff und Sauerstoff, drastisch reduziert und deren Aufnahme in den Festkörper verhindert.

Es kann erfindungsgemäß vorgesehen sein, dass durch die sich beim Schneiden bildende Refraktärmetalloxidschicht ein Cracken von Wassermolekülen an der Oberfläche des geschnittenen Festkörpers reduziert wird oder verhindert wird.

Hiermit wird vermieden, dass im Bereich der Oberfläche des geschnittenen Refraktärmetalls freie atomare Wasserstoffatome und Sauerstoffatome vorliegen, die leicht in das Innere des Festkörpers vordringen können und die aufgrund ihrer hohen Reaktivität chemisch mit dem Refraktärmetall reagieren.

Es kann auch vorgesehen sein, dass als Schneideinrichtung eine Schneide einer Sägevorrichtung verwendet wird, vorzugsweise ein Draht einer Drahtsäge, ein Faden einer Fadensäge, ein Band einer Bandsäge, ein Sägeblatt einer Bügelsäge, ein Kreissägeblatt einer Kreissäge oder eine Trennscheibe verwendet wird, wobei besonders bevorzugt die Drahtsäge oder die Fadensäge verwendet wird.

Diese Schneideinrichtungen, insbesondere der Draht der Drahtsäge und der Faden der Fadensäge, können zur Herstellung sehr kostengünstiger Schnitte der bei Raumtemperatur nicht leicht zu bearbeitenden Refraktärmetalle verwendet werden. Gleichzeitig kann bei diesen Schneideinrichtungen auf einfache Weise eine Spannung zwischen der Schneideinrichtung und dem zu schneidenden Festkörper angelegt werden, so dass das Verfahren sicher und kostengünstig umzusetzen und zu führen ist.

Gemäß einer Weiterbildung des erfindungsgemäßen Verfahrens kann vorgesehen sein, dass als Schneideinrichtung ein Draht einer Drahtsäge oder ein Faden einer Fadensäge verwendet wird und als das Fluid eine wässrige Schlämmung (ein sogenanntes Slurry) verwendet wird, in der Schleifpartikel verteilt sind, wobei vorzugsweise die Schleifpartikel ausgewählt werden aus Quarz-Partikeln, Wolframcarbid-Partikeln und Diamant-Partikeln oder Mischungen daraus.

Bevorzugt haben die Schleifpartikel eine Teilchengröße zwischen 1 µm und 100 µm.

Auch diese Verfahren sind besonders kostengünstig umzusetzen und können nur durch das Anlegen der Spannung ohne einen hohen Eintrag von Sauerstoff und Wasserstoff in das Refraktärmetall durchgeführt werden, so dass sich diese Verfahren in besonderer Weise zur Umsetzung des erfindungsgemäßen Verfahrens eignen.

Vorzugsweise kann auch vorgesehen sein, dass der Festkörper kristallin ist, bevorzugt grobkristallin oder einkristallin ist.

Die Anwendung des Verfahrens auf hochreine kristalline Festkörper ist besonders vorteilhaft, da sich dort auch geringe Verunreinigungen schon nachteilig auswirken.

Es kann dabei vorgesehen sein, dass der Festkörper in der Schnittebene nicht mehr als 100 einkristalline Bereiche aufweist, bevorzugt nicht mehr als 20 einkristalline Bereiche, besonders bevorzugt nicht mehr als 10 einkristalline Bereiche aufweist.

Die physikalischen und mechanischen Eigenschaften von grobkörnigem und hochreinem Niob sind dabei besonders vorteilhaft für die Anwendung zum Tiefziehen von Resonatorzellen für Beschleunigerstrukturen. Es werden Dehnungen von 85 bis 95 % erzielt. Durch die hohe Reinheit des Materials gibt es fast keine Segregationen, so dass die Korngrenzen beim Zugversuch nicht einschnüren. Trotz eines extrem groben Korns ist auf Grund der extrem hohen Dehnungswerte eine hervorragende Tiefziehfähigkeit gegeben. Jede Korngrenze und jede Verunreinigung kann das zur Beschleunigung der Feinteilchen (Elektronen/Positronen) angelegte magnetische Feld (bis zu 40 MeV Beschleunigungsspannung) stören und somit zum Versagen der Kavität führen. Je gröber die Kornstruktur desto geringer ist die Anzahl an Korngrenzen und desto geringer wird die Gefahr einer Magnetfeldstörung sein.

Des Weiteren kann vorgesehen sein, dass zwischen dem Festkörper und der Schneideinrichtung beim Schneiden eine elektrische Spannung von zumindest 1 V angelegt wird, bevorzugt eine elektrische Spannung zwischen 5 V und 200 V angelegt wird.

Ganz besonders bevorzugt wird eine elektrische Spannung zwischen 5 V und 50 V angelegt. Bei diesen Spannungen von zumindest 1 V beziehungsweise zumindest 5 V kann ein positiver Effekt bezüglich der Stärke der schützenden Oxidschicht und damit einhergehend mit der Schutzwirkung gegenüber dem Cracken von Wassermolekülen und ungewollt eingetragenen Gases erzielt werden. Gleichzeitig kann mit Spannungen von 200 V und weniger verhindert werden, dass durch resultierende Ströme die frisch geschnittene Oberfläche erhitzt wird und dadurch eine Veränderung der Struktur der Schnittfläche oder des gesamten zu schneidenden oder abgeschnittenen Teils des Festkörpers verhindert werden.

Gemäß einer bevorzugten Weiterbildung der vorliegenden Erfindung kann vorgesehen sein, dass die Schneideinrichtung auf ein elektrisch positives Potenzial gegenüber Masse gebracht wird, wobei vorzugsweise der Festkörper auf Massepotenzial gebracht wird.

Dadurch kann die Anlagerung von Sauerstoff-Ionen im Bereich der Schnittfläche verstärkt werden, um so möglichst schnell eine schützende Oxidschicht an der Schnittfläche auszubilden.

Bevorzugt kann auch vorgesehen sein, dass der Festkörper aus einem Refraktärmetall der chemischen Hauptgruppe IVb, Vb oder Vlb besteht.

Bei der Anwendung des erfindungsgemäßen Verfahrens auf diese Refraktärmetalle wirkt sich das Verfahren besonders vorteilhaft aus, da diese mit anderen Verfahren nicht einfach zu schneiden sind und die Entfernung von Verunreinigungen durch Sauerstoff nur mit größerem Aufwand zu bewerkstelligen ist.

Es kann ferner vorgesehen sein, dass der Festkörper aus Titan, Tantal, Niob, Vanadium, Zirkonium, Molybdän oder Wolfram besteht, wobei Titan, Tantal, Niob und Zirkonium besonders bevorzugt sind und Niob ganz besonders bevorzugt ist.

Bei diesen Refraktärmetallen ergeben sich besonders große Kostenvorteile, da mit dem erfindungsgemäßen Verfahren eine hohe Reinheit ohne aufwendige Nachbehandlung möglich ist.

Gemäß einer bevorzugten Ausführung des erfindungsgemäßen Verfahrens kann vorgesehen sein, dass Scheiben vom Festkörper abgeschnitten werden.

Scheiben sind eine besonders leicht abzuschneidende Geometrie, die auch nachfolgend für viele Anwendungen zur Weiterverarbeitung geeignet ist.

Des Weiteren kann vorgesehen sein, dass der Festkörper aus einem hochreinen Refraktärmetall besteht, wobei die Reinheit des Refraktärmetalls zumindest 3N beträgt, vorzugsweise zumindest 4N.

Bei diesen Reinheiten wirkt sich das erfindungsgemäße Verfahren besonders vorteilhaft aus.

Mit einer Weiterbildung wird vorgeschlagen, dass der Festkörper beim Schneiden in einem Bad des wässrigen Fluids gelagert wird und die Schneideinrichtung beim Schneiden zumindest bereichsweise durch das Bad geführt wird.

Hiermit wird sichergestellt, dass eine ausreichende Menge Wasser beziehungsweise eine ausreichende Dichte von Wassermolekülen an der Schnittfläche zur schnellen Ausbildung der schützenden Oxidschicht zur Verfügung steht. Damit kann die neu geschaffene Oberfläche schon während des Schnitts vor eindringenden Verunreinigungen geschützt werden. Zudem ist eine Bearbeitung in wässrigem Medium besonders einfach und kostengünstig zu realisieren.

Zur Vorbereitung der nachfolgenden Verwendung kann vorgesehen sein, dass die Oxidschicht an der Oberfläche der abgeschnittenen Scheibe nach dem Schneiden durch Beizen entfernt wird.

Hiermit wird die Oberfläche der abgeschnittenen Scheibe von der schützenden Oxidschicht befreit und dadurch für eine nachfolgende Weiterbearbeitung eine mit einem kostengünstigen Verfahren gefertigte hochreine Scheibe des Refraktärmetalls bereitgestellt.

Die der vorliegenden Erfindung zugrundeliegenden Aufgaben werden ferner gelöst durch eine Scheibe aus einem Refraktärmetall hergestellt mit einem erfindungsgemäßen Verfahren ohne Entfernung der Oxidschicht, wobei das Innere der Scheibe einen Sauerstoffgehalt von weniger als 20 µg/g aufweist, und das Innere der Scheibe einen Wasserstoffgehalt von weniger als 10 µg/g aufweist, und die Scheibe an der Schnittfläche eine Oxidschicht mit einer Dicke zwischen 2 nm und 1.000 nm aufweist, vorzugsweise zwischen 10 nm und 500 nm.

Hiermit wird eine während des Schneidens zur Verhinderung von weiteren Verunreinigungen ausreichend stabile Oxidschicht gewährleistet, mit der die Metalloberfläche passiviert wird, so dass ein Cracken von Wassermolekülen an der Metalloberfläche zumindest reduziert wird, und durch die ungewollte Verunreinigungen nicht ohne weiteres hindurch dringen können.

Dabei kann vorgesehen sein, dass die Scheibe an der Schnittfläche eine amorphe Oxidschicht aufweist.

Diese amorphe Oxidschicht ist zur Passivierung der Refraktärmetalloberfläche und zur Verhinderung von weiterer Verunreinigung besonders gut geeignet und hält sich auch gut auf der Oberfläche des Refraktärmetalls.

Bevorzugt kann auch vorgesehen sein, dass das Innere der Scheibe einen Sauerstoffgehalt von weniger als 20 µg/g aufweist, vorzugsweise von weniger 10 µg/g.

Schließlich kann vorgesehen sein, dass das Innere der Scheibe einen Wasserstoffgehalt von weniger als 10 µg/g aufweist, vorzugsweise von weniger 3 µg/g.

Hiermit wird eine hochreine Scheibe des Refraktärmetalls bereitgestellt, die zur Weiterverarbeitung besonders gut geeignet ist.

Der Erfindung liegt die überraschende Erkenntnis zugrunde, dass es durch das Anlegen eines positiven Potenzials an einer Schneideinrichtung unter Anwendung eines wässrigen Fluids gelingt, eine schützende Oxidschicht auf der frisch erzeugten Oberfläche des geschnittenen Refraktärmetalls zu erzeugen, so dass ein Vordringen von Wassermolekülen zur Refraktärmetalloberfläche verhindert wird, um ein Cracken von Wassermolekülen an der Refraktärmetalloberfläche und eine nachfolgende Aufnahme von atomarem Wasserstoff und Sauerstoff zu verhindern, und schon während des Schneidens eine weitere Aufnahme von Verunreinigungen verhindert werden kann. In Abkehr von der Erwartung, dass durch die positive Aufladung der Schneideinrichtung gegen den zu schneidenden Festkörper eine zusätzliche Einlagerung von Sauerstoff in die frisch geschnittene Oberfläche provoziert wird und sich dadurch die Einlagerung von Sauerstoff ins Innere des Festkörpers beziehungsweise der frisch geschnittenen Scheibe erhöht, wurde im Rahmen der vorliegenden Erfindung gefunden, dass hierdurch kurzfristig eine Oxidschicht erzeugt wird, die eine weitere Einlagerung von Sauerstoff, Wasserstoff, Stickstoff und anderen störenden Gasen verhindert. Auf Grund des negativen Potentials von dissoziiertem Sauerstoff (O⁻) würde man eigentlich annehmen, dass ein angelegtes negatives Potential an den zu schützenden Körper eine abstoßende Wirkung auf die O⁻-Ionen haben würde und somit die Aufnahme von O verhindert würde. Überraschenderweise zeigt sich ein positives Potential dahingehend als wirksam, dass durch die rasche Ausbildung einer neuen stabilen Refraktärmetall-Oxidschicht, die Eindiffusion von O verhindert oder zumindest stark verringert wird. Gleichzeitig wird auch eine Eindiffusion von anderen störenden Verunreinigungen wie N und H durch die Oxidschicht verhindert oder zumindest stark verringert.

Die Scheiben müssen vom Ingot also vom Festkörper geschnitten werden. Ein Sägen mit Bügelsäge oder Bandsäge ist wegen den geforderten Dickentoleranzen von +/- 0,1 mm bei einer Dicke von 2,8 mm und einem Durchmesser von 265 mm nachteilig. Ein Drahterodieren ist wegen der geringen Abtragsraten bei Nb und anderen Refraktärmetallen zu teuer.

Bei einer Anwendung des erfindungsgemäßen Verfahrens auf Nb zur Herstellung von Niob-Scheiben konnte bei 72-stündiger wässriger schleifender Bearbeitung keine O-Aufnahme festgestellt werden (Messsensibilität +/- 1 µg/g).

Im Folgenden wird ein Ausführungsbeispiel der Erfindung anhand einer schematisch dargestellten Figur und eines Diagramms erläutert, ohne jedoch dabei die Erfindung zu beschränken. Dabei zeigt:
Figur 1: eine schematische Darstellung einer Vorrichtung zur Umsetzung eines erfindungsgemäßen Verfahrens und
Figur 2: ein Diagramm in dem der RRR-Wert von Niob in Abhängigkeit vom Gehalt an O und N und der Summe von O und N aufgetragen ist.

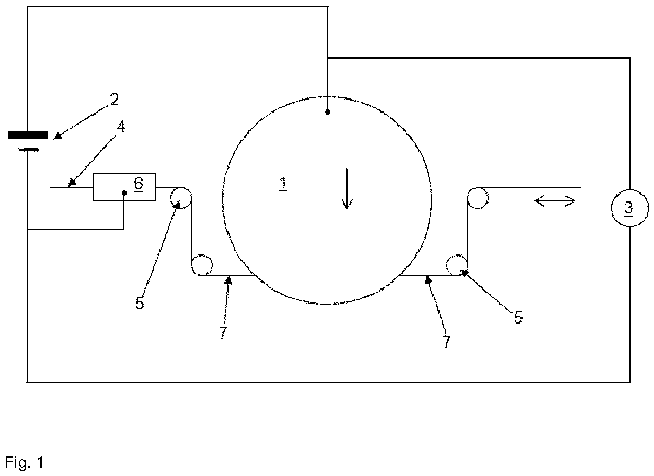

In Figur 1 zeigt eine schematische Darstellung einer Vorrichtung zur Umsetzung eines erfindungsgemäßen Verfahrens. Mit der Vorrichtung wird ein zylindrischer Festkörper 1 eines Refraktärmetalls in Scheiben geschnitten. Der Festkörper 1 besteht beispielsweise aus hochreinem Nb mit Gasgehalten (O, N ,H ,C) von in Summe kleiner 20 µg/g und Restwiderstandsverhältnissen RRR von über 300. Solches Niob wird im supraleitenden Zustand bei tiefen Temperaturen in Hohlraumresonatoren so genannten Kavitäten (Cavities) zur Teilchenbeschleunigung eingesetzt. Das Restwiderstandsverhältnis RRR ist der Quotient des elektrischen Widerstands bei Raumtemperatur und des elektrischen Widerstands unmittelbar oberhalb der Sprungtemperatur zur Supraleitung. Der RRR Wert ist ein Vergleichsmaß für die kryogene Wärmeleitfähigkeit des Materials.

Ein "Refining" aus Standard-Nb (Gasgehalte ca. 200 µg/g) geschieht durch mehrmaliges Elektronenstrahlumschmelzen unter Vakuumbedingungen von besser als 10⁻⁵ mbar und Temperaturen von ca. 3000 °C. Die Resonatorzellen sind üblicherweise aus tiefgezogenen, gewalzten Blechen geschweißt. Um die Kontamination des hochreinen Nb während der Abarbeitung vom Schmelzblock zum Blech zu minimieren ist erheblicher Aufwand an Schleif-und Beizvorgängen notwendig.

Ein elektrischer Pol einer elektrischen Spannungsquelle 2, deren elektrische Spannung mit einem Voltmeter 3 gemessen werden kann, ist an den Festkörper 1 aus dem Refraktärmetall, insbesondere aus Nb, angeschlossen. Der Festkörper 1 wird mit einer Drahtsäge geschnitten. Die Drahtsäge umfasst einen verkupferten Stahldraht 4, der über bewegliche Umlenkrollen 5 geführt wird. Der verkupferte Stahldraht 4 wird dabei durch ein Bad eines wässrigen Slurry 6 geführt. Das Slurry 6 enthält Wasser und Partikel eines Schleifmittels und ist durch eine Schlämmung der Bestandteile gebildet.

Der mit dem Slurry 6 benetzte Stahldraht 7 schneidet mit Hilfe der Partikel des Schleifmittels den Festkörper 1 in Scheiben. Dazu wird der mit Slurry benetzte verkupferte Stahldraht 7 geeignet mit den Umlenkrollen 5 durch den Festkörper 1 geführt. Der Slurry 6 und damit auch der Stahldraht 4, 7 ist elektrisch an den anderen Pol der Spannungsquelle 2 angeschlossen, so dass der mit Slurry benetzte Stahldraht 7 gegenüber dem Festkörper 1 auf positivem elektrischem Potenzial liegt. Mit dem Aufbau kann aber auch zu Versuchszwecken (siehe unten) eine umgekehrte Polung verwendet werden. Die elektrische Spannung kann hierzu mit der Spannungsquelle 2 variabel eingestellt werden.

Ein Anodisch-schalten eines Nb-Festkörpers 1 oder Refraktärmetall-Festkörpers 1 erscheint im ersten Moment widersinnig. Durch den gezielten Aufbau einer geschlossenen amorphen NbO-Schicht oder Refraktärmetalloxidschicht wird jedoch überraschend ein weiteres Eindiffundieren von O und anderer Verunreinigungen, wie N und H verhindert. Hierfür wird maßgeblich die Entstehung einer passivierenden Oxidschicht verantwortlich gemacht, die ein chemisches Cracken von Wassermolekülen an der Refraktärmetalloberfläche verhindert. Dadurch können nahfolgende Verfahrensschritte, wie beispielsweise ein Titan-Getter-Glühen, zur Reinigung der entstandenen Nb-Scheiben oder Refraktärmetallscheiben vermieden werden.

Drahtsägen ist eigentlich für spröde Materialien gedacht und geeignet, beispielsweise für Si-Wafer in der Chip Industrie oder für Quarzglas. Durch Anpassung der Schnittparameter gelingt es, das sehr weiche Nb auf einer Drahtsäge mit Dickentoleranzen von 0,03 mm bis 0,07 mm zu schneiden. Das Trennen geschieht bei solchen Sägen durch ein in wässriger Lösung befindliches Schleifmittel das von dem Schneidedraht 4 mitgenommen wird und sich so der Draht 4, 7 langsam durch das Ausgangsmaterial 1 schleift.

Im Folgenden wird Anhand von Messungen der Gehalt von O und H in vom Festkörper mit einem erfindungsgemäßen Verfahren mit einer Drahtsäge und einem wässrigen Slurry geschnittenen Scheiben bestimmt.

An Proben aus Zr, Ta und Nb wurden Schleifversuche mit unterschiedlichen Spannungspotentialen durchgeführt. Die angelegte Spannung wurde von -50 bis +50 Volt gewählt.

Die Proben wurden jeweils 1 Minute wässrig geschliffen.

Die Ausgangsgasgehalte der Proben:

| | | |
|---|---|---|
| Zr: | O-Gehalt: 630 µg/g | H-Gehalt: 2 µg/g |
| Ta: | O-Gehalt: 9 µg/g | H-Gehalt: 1 µg/g |
| Nb: | O-Gehalt: 6 µg/g | H-Gehalt: 1 µg/g |

Tabelle 1: In der folgenden Tabelle 1 sind Messwerte für den Sauerstoffgehalt (O-Gehalt) in µg/g für vom Festkörper geschnittene Scheiben aus Zirkonium (Zr), Tantal (Ta) und Niob (Nb) nach dem Schleifen aufgeführt, wobei die Schnitte mit dem beispielhaften Aufbau nach Figur 1 und unterschiedlichen angelegten elektrischen Gleichspannungen durchgeführt wurden. Als elektrische Spannung in Volt ist dabei die elektrische Potenzialdifferenz zwischen dem Festkörper 1 und dem Draht 4, 7 der Drahtsäge angegeben.

| **Spannung** [V] | **Zr** | **Ta** | **Nb** |
|---|---|---|---|
| -50 | 753 | 119 | 197 |
| -45 | 944 | 125 | 224 |
| -40 | 817 | 92 | 174 |
| -35 | 764 | 107 | 185 |
| -30 | 882 | 83 | 169 |
| -25 | 759 | 67 | 182 |
| -20 | 732 | 112 | 143 |
| -15 | 798 | 48 | 177 |
| -10 | 744 | 54 | 164 |
| -5 | 695 | 27 | 121 |
| 0 | 672 | 15 | 98 |
| 5 | 641 | 9 | 27 |
| 10 | 633 | 8 | 8 |
| 15 | 628 | 10 | 6 |
| 20 | 625 | 9 | 6 |
| 25 | 628 | 7 | 5 |
| 30 | 634 | 9 | 6 |
| 35 | 619 | 10 | 6 |
| 40 | 622 | 9 | 7 |
| 45 | 631 | 10 | 5 |
| 50 | 627 | 8 | 6 |

Tabelle 2: In der folgenden Tabelle 2 sind Messwerte für den Wasserstoffgehalt (H-Gehalt) in µg/g für vom Festkörper geschnittene Scheiben aus Zirkonium (Zr), Tantal (Ta) und Niob (Nb) nach dem Schleifen aufgeführt, wobei die Schnitte mit dem beispielhaften Aufbau nach Figur 1 und unterschiedlichen angelegten elektrischen Gleichspannungen durchgeführt wurden. Als elektrische Spannung in Volt ist dabei die elektrische Potenzialdifferenz zwischen dem Festkörper 1 und dem Draht 4, 7 der Drahtsäge angegeben.

| **Spannung** [V] | **Zr** | **Ta** | **Nb** |
|---|---|---|---|
| -50 | 29 | 19 | 22 |
| -45 | 32 | 25 | 24 |
| -40 | 28 | 22 | 19 |
| -35 | 29 | 17 | 21 |
| -30 | 33 | 29 | 18 |
| -25 | 28 | 23 | 21 |
| -20 | 33 | 24 | 23 |
| -15 | 31 | 26 | 20 |
| -10 | 28 | 23 | 18 |
| -5 | 17 | 18 | 12 |
| 0 | 6 | 15 | 7 |
| 5 | 2 | 5 | 4 |
| 10 | 1 | 2 | 1 |
| 15 | 2 | 1 | 1 |
| 20 | 2 | 1 | 1 |
| 25 | 2 | 1 | 1 |
| 30 | 2 | 1 | 1 |
| 35 | 1 | 1 | 1 |
| 40 | 2 | 1 | 1 |
| 45 | 2 | 1 | 1 |
| 50 | 1 | 1 | 1 |

Es ist deutlich ersichtlich, dass es bei einer angelegten Spannung von +20 Volt zu keinerlei Aufnahme von Gasen während des wässrigen Schleifprozesses kommt. Ohne angelegte Spannung (U = 0 V) sind die Gasaufnahmen bei Zr und Ta eher als gering einzustufen. Bei Nb kommt es bereits zu einem drastischen Anstieg im O- und H- Gehalt.

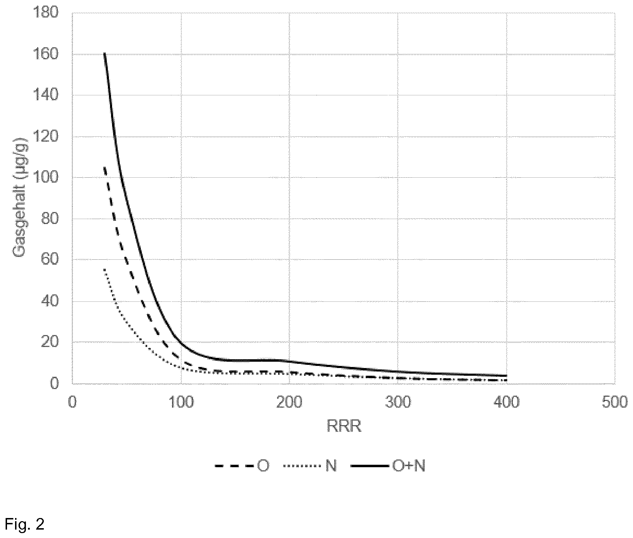

Figur 2 zeigt ein Diagramm in dem der RRR-Wert von Niob (Nb) in Abhängigkeit vom Gehalt an O und N und der Summe von O und N aufgetragen ist.

Durch in Summe achtmaliges Elektronenstrahlschmelzen unter Vakuum wird Nb mit besonders geringen Gasgehalten hergestellt. Dies ist für den Einsatz in supraleitenden Hochfrequenzhohlraumbeschleunigern notwendig, um ein möglichst hohes Restwiderstandsverhältnis RRR einzustellen. Der RRR Wert ist ein Vergleichsmaß für die kryogene Wärmeleitfähigkeit des Materials. Der RRR Wert ist maßgeblich vom Anteil an interstitiellen Elementen (Gasgehalten) beeinflusst. Um einen RRR von 300 zu erzielen, müssen die Gasgehalte in Summe deutlich kleiner 20 µg/g sein.

Die Grafik nach Figur 2 zeigt die Abhängigkeit des RRR Werts von den interstitiellen Verunreinigungen in Niob.

Der verwendete grob zylindrische Festkörper hat einen Durchmesser von 305 mm und eine Länge von 1600 mm. Der Gasgehalt des Festkörpers beträgt 4 bis 7 µg/g N, 1 bis 2 µg/g O, 1 bis 2 µg/g C und weniger als 1 µg/g H. Der Festkörper hat einen RRR-Wert von 400.

In einem ersten Teil-Versuch wurde ein Teil des Festkörpers (Länge 300 mm) mittels Drahtsäge ohne Anlegen einer Spannung (U = 0V) wässrig zu Scheiben mit einer Dicke von 2,8 mm gesägt. Der Aufbau ist in Figur 1 gezeigt. Der Schneidprozess dauert circa 72 Stunden.

Nach dem Schneiden ergeben sich folgende Gasgehalte und der daraus resultierende RRR Wert:

| | |
|---|---|
| N Gehalt: | 4... µg/g |
| O Gehalt: | 35 µg/g |
| C Gehalt: | 1...2 µg/g |
| H Gehalt: | 40 µg/g |
| RRR: | 260 |

In einem zweiten Teilversuch wurde ein weiteres Teilstück (Länge 300 mm) des gleichen Festkörpers mit einer angelegten Spannung von +30 V ebenfalls zu Scheiben mit einer Dicke von 2,8 mm gesägt. Die Prozesszeit war hier ebenfalls 72 Stunden.

Nach dem Spannungs-geschützten Schneiden ergeben sich folgende Gasgehalte und der daraus resultierende RRR Wert:

| | |
|---|---|
| N Gehalt: | 5...7 µg/g |
| O Gehalt: | 3...7 µg/g |
| C Gehalt: | 1...2 µg/g |
| H Gehalt: | 25 µg/g |
| RRR: | 340 |

In diesem zweiten Teilversuch wurde nach einer 600°C Vakuum-Glühung ein H Gehalt von weniger als 1 µg/g erzielt, der RRR Wert erzielte dann 480.

Dritter Teilversuch: Ein weiterer Nb-Festkörper mit Durchmesser 480 mm mit folgenden Ausgangsdaten (Gasgehalten) wurde zu Scheiben von 4,6 mm geschnitten.

| | |
|---|---|
| N Gehalt: | 11...13 µg/g |
| O Gehalt: | 7...18 ug/g |
| C Gehalt: | 1...2 µg/g |
| H Gehalt: | 1 µg/g |
| RRR: | 288...336 |

Es wurde eine Spannung von ebenfalls U= +30 V angelegt. Die Schnittdauer beträgt 100 Stunden.

Die Ergebnisse nach dem Sägen:

| | |
|---|---|
| N Gehalt: | 11...14 µg/g |
| O Gehalt: | 17...25 µg/g |
| C Gehalt: | 1...2 µg/g |
| H Gehalt: | 20...25 µg/g |
| RRR: | 220...290 |

In der folgenden Tabelle 3 sind die Ergebnisse zusammengefasst, wobei bei Mehrfachmessungen hier die Mittelwerte berechnet wurden:

| | Start | Sägen U = 0 V | Delta | Sägen U = 30 V | Delta |
|---|---|---|---|---|---|
| N | 5,5 | 5,5 | 0 | 5,5 | 0 |
| O | 1,5 | 35 | 33,5 | 5 | 3,5 |
| C | 1,5 | 1,5 | 0 | 1,5 | 0 |
| H | 1 | 40 | 39 | 25 | 24 |
| RRR | 400 | 260 | -140 | 340 | -60 |
| | | | | | |
| N | 12 | | | 12,5 | 0,5 |
| O | 12,5 | | | 21 | 8,5 |
| C | 1,5 | | | 1,5 | 0 |
| H | 1 | | | 22,5 | 21,5 |
| RRR | 312 | | | 255 | -57 |

Es kann also sowohl die Sauerstoffaufnahme als auch die Wasserstoffaufnahme beim wässrigen Trennen von Refraktärmetallen durch eine angelegte Spannung verhindert werden.

Bei langen Prozesszeiten kommt es bei nicht-Spannungs-geschütztem Schneiden zu einer Sauerstoffaufnahme von 33,5 µg/g und zu einer Wasserstoffaufnahme von 39 µg/g.

Durch die angelegte Spannung kann die Sauerstoffaufnahme auch bei extrem langen Prozesszeiten auf 10 bis 30 % reduziert werden.

Beim Drahtsägen von Refraktärmetallen kommt es durch die Dicken-abhängigen hohen Prozesszeiten (in den Ausführungsbeispielen 72 beziehungsweise 100 Stunden) zu einer minimalen Sauerstoffaufnahme von 3 bis 8,5 µg/g und zu einer merklichen Wasserstoffaufnahme von 20 bis 25 µg/g.

Der aufgenommene Sauerstoff kann nicht mehr aus den Bauteilen reduziert werden. Der Wasserstoff kann durch eine Vakuum-Glühung bei T > 600 °C komplett entfernt werden.

Die in der voranstehenden Beschreibung, sowie den Ansprüchen, Figuren und Ausführungsbeispielen offenbarten Merkmale der Erfindung können sowohl einzeln, als auch in jeder beliebigen Kombination für die Verwirklichung der Erfindung in ihren verschiedenen Ausführungsformen wesentlich sein.

### Bezugszeichenliste

- 1: Festkörper / Refraktärmetall
- 2: Spannungsquelle
- 3: Voltmeter
- 4: Verkupferter Stahldraht
- 5: Umlenkrolle
- 6: Slurry
- 7: Verkupferter Stahldraht mit Slurry

## Patentansprüche

1. Verfahren zum Schneiden von Refraktärmetallen, bei dem ein Festkörper (1) aus einem Refraktärmetall mit einer Schneideinrichtung (4, 7) mechanisch und spanabhebend geschnitten wird, wobei die Schneideinrichtung (4, 7) zum Schneiden mit einem Fluid (6) aufweisend zumindest 50 Gew% Wasser benetzt wird, wobei die Schneideinrichtung (4, 7) während des Schneidens auf ein positives elektrisches Potenzial gegenüber dem Festkörper (1) gebracht wird.

2. Verfahren nach Anspruch 1, **dadurch gekennzeichnet, dass** die Schnittfläche des Festkörpers (1) durch das positive elektrische Potenzial der Schneideinrichtung (4, 7) gegenüber dem Festkörper (1) und durch das wässrige Fluid (6) oberflächlich oxidiert wird, so dass sich beim Schneiden eine Oxidschicht auf der Schnittfläche bildet oder eine amorphe Oxidschicht auf der Schnittfläche bildet.

3. Verfahren nach Anspruch 2, **dadurch gekennzeichnet, dass** durch die sich beim Schneiden bildende Oxidschicht eine Aufnahme von Wasserstoff und Sauerstoff durch die Oxidschicht hindurch ins Innere des Festkörpers (1) reduziert wird oder verhindert wird, wobei auch die Aufnahme Stickstoff und/oder Kohlenstoff und/oder von anderen Gasen durch die Oxidschicht hindurch ins Innere des Festkörpers (1) reduziert wird oder verhindert wird.

4. Verfahren nach einem der vorangehenden Ansprüche, **dadurch gekennzeichnet, dass** als Schneideinrichtung (4, 7) eine Schneide (4, 7) einer Sägevorrichtung verwendet wird, wie ein Draht (4, 7) einer Drahtsäge, ein Faden einer Fadensäge, ein Band einer Bandsäge, ein Sägeblatt einer Bügelsäge, ein Kreissägeblatt einer Kreissäge oder eine Trennscheibe verwendet wird.

5. Verfahren nach einem der vorangehenden Ansprüche, **dadurch gekennzeichnet, dass** als Schneideinrichtung (4, 7) ein Draht (4, 7) einer Drahtsäge oder ein Faden einer Fadensäge verwendet wird und als das Fluid (6) eine wässrige Schlämmung (6) verwendet wird, in der Schleifpartikel verteilt sind, oder
als Schneideinrichtung (4, 7) ein Draht (4, 7) einer Drahtsäge oder ein Faden einer Fadensäge verwendet wird und als das Fluid (6) eine wässrige Schlämmung (6) verwendet wird, in der Schleifpartikel verteilt sind, wobei die Schleifpartikel ausgewählt werden aus Quarz-Partikeln, Wolframcarbid-Partikeln und Diamant-Partikeln oder Mischungen daraus.

6. Verfahren nach einem der vorangehenden Ansprüche, **dadurch gekennzeichnet, dass** der Festkörper (1) kristallin ist, grobkristallin ist oder einkristallin ist.

7. Verfahren nach einem der vorangehenden Ansprüche, **dadurch gekennzeichnet, dass** zwischen dem Festkörper (1) und der Schneideinrichtung (4, 7) beim Schneiden eine elektrische Spannung von zumindest 1 V angelegt wird, oder eine elektrische Spannung zwischen 5 V und 200 V angelegt wird.

8. Verfahren nach einem der vorangehenden Ansprüche, **dadurch gekennzeichnet, dass** die Schneideinrichtung (4, 7) auf ein elektrisch positives Potenzial gegenüber Masse gebracht wird oder
die Schneideinrichtung (4, 7) auf ein elektrisch positives Potenzial gegenüber Masse gebracht wird, wobei der Festkörper (1) auf Massepotenzial gebracht wird.

9. Verfahren nach einem der vorangehenden Ansprüche, **dadurch gekennzeichnet, dass** der Festkörper (1) aus einem Refraktärmetall der chemischen Hauptgruppe IVb, Vb oder VIb besteht oder der Festkörper (1) aus Titan, Tantal, Niob, Vanadium, Zirkonium, Molybdän oder Wolfram besteht.

10. Verfahren nach einem der vorangehenden Ansprüche, **dadurch gekennzeichnet, dass** der Festkörper (1) beim Schneiden in einem Bad des wässrigen Fluids (6) gelagert wird und die Schneideinrichtung (4, 7) beim Schneiden zumindest bereichsweise durch das Bad geführt wird.

11. Verfahren nach Anspruch 2 oder 3 oder einem sich auf Anspruch 2 rückbeziehenden Anspruch 4 bis 10, **dadurch gekennzeichnet, dass**
die Oxidschicht an der Oberfläche der abgeschnittenen Scheibe nach dem Schneiden durch Beizen entfernt wird.

12. Scheibe aus einem Refraktärmetall hergestellt mit einem Verfahren nach einem der Ansprüche 1 bis 10, **dadurch gekennzeichnet, dass**
das Innere der Scheibe einen Sauerstoffgehalt von weniger als 20 µg/g aufweist, und das Innere der Scheibe einen Wasserstoffgehalt von weniger als 10 µg/g aufweist, und die Scheibe an der Schnittfläche eine Oxidschicht mit einer Dicke zwischen 2 nm und 1.000 nm aufweist.

13. Scheibe nach Anspruch 12, **dadurch gekennzeichnet, dass** die Scheibe an der Schnittfläche eine amorphe Oxidschicht aufweist.

14. Scheibe nach einem der Ansprüche 12 oder 13, **dadurch gekennzeichnet, dass** die Scheibe an der Schnittfläche eine Oxidschicht mit einer Dicke zwischen 10 nm und 500 nm aufweist.

15. Scheibe nach einem der Ansprüche 12 bis 14, **dadurch gekennzeichnet, dass** das Innere der Scheibe einen Sauerstoffgehalt von weniger als 10 µg/g aufweist, und/oder das Innere der Scheibe einen Wasserstoffgehalt von weniger als 3 µg/g aufweist.

## Claims

1. A method for cutting refractory metals, in which a solid body (1) made of a refractory metal is cut mechanically and by chip removal with a cutting device (4, 7), wherein the cutting device (4, 7) is wetted for cutting with a fluid (6) having at least 50 weight % water, wherein the cutting device (4, 7) is brought to a positive electrical potential in relation to the solid body (1) during cutting.

2. The method according to Claim 1, **characterized in that** the cutting surface of the solid body (1) is oxidized on the surface by the positive electrical potential of the cutting device (4, 7) in relation to the solid body (1) and by the aqueous fluid (6), so that an oxide layer forms on the cutting surface during cutting or an amorphous oxide layer forms on the cutting surface.

3. The method according to 2, **characterized in that** due to the oxide layer formed during cutting, an absorption of hydrogen and oxygen through the oxide layer into the interior of the solid body (1) is reduced or prevented, wherein the absorption of nitrogen and/or carbon and/or other gases through the oxide layer into the interior of the solid body (1) is also reduced or prevented.

4. The method according to any one of the preceding claims, **characterized in that** as a cutting device (4, 7), a blade of a saw device is used, such as a wire of a wire saw, a thread of a thread saw, a band of a band saw, a saw blade of a hacksaw, a circular saw blade of a circular saw or a cutting disc is used.

5. The method according to any one of the preceding claims, **characterized in that** as a cutting device (4, 7), a wire of a wire saw or a thread of a thread saw is used, and as a fluid (6), an aqueous sludge is used, in which grinding particles are distributed, or as a cutting device (4, 7), a wire of a wire saw, a thread of a thread saw or a band of a band saw is used, and as a fluid (6), an aqueous sludge is used, in which grinding particles are distributed, wherein the grinding particles are selected from quartz particles, tungsten carbide particles and diamond particles or mixtures of these.

6. The method according to any one of the preceding claims, **characterized in that** the solid body (1) is crystalline, granular crystalline or monocrystalline.

7. The method according to any one of the preceding claims, **characterized in that** between the solid body (1) and the cutting device (4, 7), an electrical voltage of at least 1 V is applied during cutting, or an electrical voltage of between 5 V and 200 V is applied.

8. The method according to any one of the preceding claims, **characterized in that** the cutting device (4, 7) is brought to an electrically positive potential in relation to ground, or
the cutting device (4, 7) is brought to an electrically positive potential in relation to ground, wherein the solid body (1) is brought to ground potential.

9. The method according to any one of the preceding claims, **characterized in that** the solid body (1) consists of a refractory metal from the main chemical group IVb, Vb or Vlb, or the solid body (1) consists of titanium, tantalum, niobium, vanadium, zirconium, molybdenum or tungsten.

10. The method according to any one of the preceding claims, **characterized in that** the solid body (1) is positioned in a bath of the aqueous fluid (6) during cutting, and the cutting device (4, 7) is guided at least partially through the bath during cutting.

11. The method according to claim 2 or 3 or any claim 4 to 10 when referring back to claim 2, **characterized in that**
the oxide layer on the surface of the cut disc is removed by pickling after cutting.

12. A disc produced from a refractory metal with a method according to any one of Claims 1 to 10, **characterized in that**
the interior of the disc has an oxygen content of less than 20 µg/g, and the interior of the disc has a hydrogen content of less than 10 µg/g, and the disc has an oxide layer on the cutting surface with a thickness of between 2 nm and 1,000 nm.

13. The disc according to Claim 12, **characterized in that** the disc has an amorphous oxide layer on the cutting surface.

14. The disc according to Claim 12 or 13, **characterized in that** the disc has an oxide layer on the cutting surface with a thickness of between 10 nm and 500 nm.

15. The disc according to any one of Claims 12 to 14, **characterized in that** the interior of the disc has an oxygen content of less than 10 µg/g, and/or the interior of the disc has a hydrogen content of less than 3 µg/g.

## Revendications

1. Procédé de découpe de métaux réfractaires dans lequel un corps solide (1) en métal réfractaire est découpé mécaniquement et par enlèvement de copeaux avec un dispositif de découpe (4, 7), où le dispositif de découpe (4, 7), pour la découpe, est mouillé avec un fluide (6) présentant au moins 50 % en poids d'eau, où le dispositif de découpe (4, 7), pendant la découpe, est amené à un potentiel électrique positif par rapport au corps solide (1).

2. Procédé selon la revendication 1, **caractérisé en ce que** la surface de coupe du corps solide (1) est oxydée en surface par le potentiel électrique positif du dispositif de découpe (4, 7) par rapport au corps solide (1) et par le fluide (6) aqueux, de sorte qu'il se forme une couche d'oxyde sur la surface de coupe lors de la découpe ou qu'il se forme une couche d'oxyde amorphe sur la surface de coupe.

3. Procédé selon la revendication 2, **caractérisé en ce que** la couche d'oxyde se formant lors de la découpe réduit ou empêche une absorption d'hydrogène et d'oxygène à travers la couche d'oxyde vers l'intérieur du corps solide (1), où également l'absorption d'azote et/ou de carbone, et/ou d'autres gaz, est réduite ou empêchée par et à travers la couche d'oxyde vers l'intérieur du corps solide (1).

4. Procédé selon l'une des revendications précédentes, **caractérisé en ce qu'**une lame (4, 7) d'un dispositif de sciage est employée en tant que dispositif de découpe (4, 7), comme un câble (4, 7) d'une scie à câble, un fil d'une scie à fil, une bande d'une scie à ruban, une lame de sciage d'une scie à archet, une lame de scie circulaire d'une scie circulaire ou un disque de tronçonnage.

5. Procédé selon l'une des revendications précédentes, **caractérisé en ce qu'**un câble (4, 7) d'une scie à câble ou un fil d'une scie à fil est employé en tant que dispositif de découpe (4, 7), et une suspension (6) aqueuse dans laquelle sont dispersées des particules de polissage, est employée en tant que fluide (6), ou
un câble (4, 7) d'une scie à câble ou un fil d'une scie à fil est employé en tant que dispositif de découpe (4, 7) et une suspension (6) aqueuse, dans laquelle sont dispersées des particules de polissage, est employée en tant que fluide (6), où les particules de polissage sont choisies parmi des particules de quartz, des particules de carbure de tungstène et des particules de diamant, ou des mélanges de celles-ci.

6. Procédé selon l'une des revendications précédentes, **caractérisé en ce que** le corps solide (1) est cristallin, est de cristallinité grossière ou est monocristallin.

7. Procédé selon l'une des revendications précédentes, **caractérisé en ce qu'**une tension électrique d'au moins 1 V est appliquée entre le corps solide (1) et le dispositif de découpe (4, 7) lors de la découpe, ou qu'une tension électrique entre 5 V et 200 V est appliquée.

8. Procédé selon l'une des revendications précédentes, **caractérisé en ce que** le dispositif de découpe (4, 7) est mis à un potentiel électrique positif par rapport à la terre ou
le dispositif de découpe (4, 7) est mis à un potentiel électrique positif par rapport à la terre, où le corps solide (1) est mis au potentiel de la terre.

9. Procédé selon l'une des revendications précédentes, **caractérisé en ce que** le corps solide (1) est constitué d'un métal réfractaire du groupe principal chimique IVb, Vb ou VIb, ou le corps solide (1) est constitué de titane, de tantale, de niobium, de vanadium, de zirconium, de molybdène ou de tungstène.

10. Procédé selon l'une des revendications précédentes, **caractérisé en ce que** le corps solide (1) est placé dans un bain de fluide (6) aqueux lors de la découpe, et le dispositif de découpe (4, 7) est mené à travers le bain au moins par endroits lors de la découpe.

11. Procédé selon la revendication 2 ou la revendication 3, ou selon une revendication 4 à 10 faisant référence à la revendication 2, **caractérisé en ce que** la couche d'oxyde est enlevée sur la surface du disque découpé après la découpe par un décapage.

12. Disque à base d'un métal réfractaire fabriqué avec un procédé selon l'une des revendications 1 à 10, **caractérisé en ce que**
l'intérieur du disque présente une teneur en oxygène inférieure à 20 µg/g, et l'intérieur du disque présente une teneur en hydrogène inférieure à 10 µg/g, et le disque présente sur sa surface de coupe une couche d'oxyde d'une épaisseur entre 2 nm et 1000 nm.

13. Disque selon la revendication 12, **caractérisé en ce que** le disque présente une couche d'oxyde amorphe sur la surface de coupe.

14. Disque selon l'une des revendications 12 ou 13, **caractérisé en ce que** le disque présente sur la surface de coupe une couche d'oxyde avec une épaisseur entre 10 nm et 500 nm.

15. Disque selon l'une des revendications 12 à 14, **caractérisé en ce que** l'intérieur du disque présente une teneur en oxygène inférieure à 10 µg/g, et/ou l'intérieur du disque présente une teneur en hydrogène inférieure à 3 µg/g.
